# FASCICULE DE BREVET EUROPEEN

(11) **EP 2 531 455 B1**
(45) Date de publication et mention de la délivrance du brevet: **08.05.2019**
(21) Numéro de dépôt: 11701518.0
(22) Date de dépôt: 01.02.2011
(51) Int. Cl.: C03C 17/00, C03C 17/04, C03B 29/08

(54) **PROCEDE DE CHAUFFAGE DANS UN FOUR DE FEUILLES DE VERRE REVETUES**
VERFAHREN ZUM ERWÄRMEN BESCHICHTETER GLASSCHEIBEN IN EINEM OFEN
METHOD FOR HEATING COATED GLASS SHEETS IN AN OVEN

(30) Priorité: 03.02.2010 BE 201000058
(43) Date de publication de la demande: 12.12.2012
(73) Titulaire: AGC Glass Europe, 1348 Louvain-la-Neuve (BE)
(72) Inventeur: PIERRE, David, B-6040 Jumet (BE); PIETERS, Ronny, B-6040 Jumet (BE); SELLIER, Jean-Marie, B-6040 Jumet (BE)
(74) Mandataire: Bayot, Daisy
(86) Numéro de dépôt international: PCT/EP2011/051362
(87) Numéro de publication internationale: WO 2011/095471

(56) Documents cités:
- EP-A2- 1 184 346
- EP-B1- 1 377 529

## Description

### 1. Domaine de l'invention

La présente invention concerne un procédé de chauffage dans un four de feuilles de verre, en vue en particulier de leur trempe ultérieure. Plus précisément, l'invention concerne un procédé de chauffage dans un four de feuilles de verre portant un revêtement décoratif de type peinture, à base de matière organique.

### 2. Solutions de l'art antérieur

Des feuilles de verre portant un revêtement décoratif de type peinture ont des applications diverses. Elles peuvent, par exemple, être utilisées comme partitions, tables, étagères ou revêtement mural (intérieur ou extérieur). De plus en plus de ces applications nécessitent des feuilles de verre trempé pour des raisons de sécurité, étant donné qu'un tel verre trempé possède une résistance aux chocs accrues. Une des méthodes de trempe du verre connue est la « trempe thermique » (refroidissement très rapide) qui nécessite, au préalable, le chauffage de la feuille de verre dans un four à des températures de l'ordre de 560-750°C.

Des fours de chauffage de feuilles de verre bien connus, en vue de leur trempe ultérieure, comprennent un convoyeur à rouleaux, généralement revêtus de céramique, au-dessus et en dessous duquel sont disposées des résistances électriques destinées à chauffer par radiation des feuilles de verre transportées sur ledit convoyeur. L'ensemble est placé dans une enceinte isolante. Lors du chauffage des résistances, les rouleaux du convoyeur accumulent de la chaleur et la restituent rapidement au verre avec lequel ils entrent en contact, par conduction. A puissance de chauffage égale des résistances inférieures et supérieures, la face inférieure d'une feuille de verre reçoit dès lors une plus grande quantité de chaleur par unité de temps que la face supérieure. Ceci peut entraîner un fléchissement concave d'une telle feuille de verre relativement au plan du convoyeur, lequel conduit éventuellement à une détérioration de sa planéité ainsi qu'à des défauts de surface dus à une concentration du poids de la feuille de verre sur une portion réduite de la surface des rouleaux. Un chauffage non uniforme des feuilles de verre peut également provoquer des distorsions optiques du verre ainsi qu'affecter l'homogénéité de leur fragmentation, une fois trempées, lorsqu'elles sont brisées. Ce phénomène est encore accentué lorsque les feuilles de verre chauffées dans le four sont revêtues de couches à basse émissivité (low-e) qui ont la propriété de réfléchir une partie importante de la chaleur radiée par les résistances. Ces couches sont de type inorganique, à base de métaux, oxydes et/ou de nitrure. Un exemple bien connu est l'empilement ZnSnOx/Ag/ZnSnOx. La face revêtue de la couche basse émissivité est généralement celle qui n'entre pas en contact avec les rouleaux du convoyeur afin que ceux-ci n'occasionnent pas de détériorations du revêtement de ces feuilles par contact mécanique. Dès lors, une partie substantielle de la chaleur radiée par les résistances supérieures ne chauffe pas la face supérieure des feuilles.

Dans l'art antérieur, il a été proposé de pallier aux phénomènes de fléchissement de la feuille de verre en équilibrant le profil de température des feuilles de verre convoyées dans le four. En particulier, on peut prévoir à cette fin dans le four de chauffage, notamment selon les enseignements du brevet US4390359, un dispositif d'injection de gaz chaud au-dessus de la face supérieure des feuilles de verre convoyées dans ledit four. Un transfert de chaleur par convection forcée s'opère entre les jets de gaz et la face supérieure des feuilles. Il est nécessaire dans ce cas d'interrompre l'injection de gaz en cours de cycle de chauffage, lorsque la température du verre a augmenté suffisamment, faute de quoi un fléchissement convexe des feuilles peut se produire. Le contrôle du moment précis où il est nécessaire de limiter l'apport de chaleur par convection forcée à la face supérieure des feuilles de verre est délicat et il a dès lors été proposé de disposer, en plus du dispositif d'injection de gaz chaud au-dessus de la face supérieure, un dispositif d'injection de gaz chaud sous le convoyeur perpendiculairement (EP 058 529 A1) ou obliquement (EP 1 377 529 B1) par rapport aux feuilles de verre (four à double convection). Un tel dispositif permet d'équilibrer l'effet thermique total appliqué aux faces supérieure et inférieure d'une feuille de verre, éliminant ainsi le phénomène de fléchissement et rétablissant la planéité des feuilles de verre.

En pratique, l'injection de gaz chaud sous le convoyeur n'est pas enclenchée dès l'entrée de la feuille dans le four : la face inférieure de ladite feuille est d'abord seulement chauffée par la chaleur radiée par les résistances disposées sous le convoyeur alors que la face supérieure est chauffée par la chaleur radiée par les résistances disposées au-dessus du convoyeur ainsi que par convection forcée au moyen de jets de gaz chaud situés au dessus du convoyeur et dirigés vers ladite face. Lorsque le bilan thermique de la chaleur apportée à chaque face de la feuille devient défavorable à sa face inférieure et que, par conséquent, la feuille s'infléchit de manière convexe au-dessus du convoyeur, l'injection de gaz chaud dirigée vers la face inférieure de la feuille est alors enclenchée.

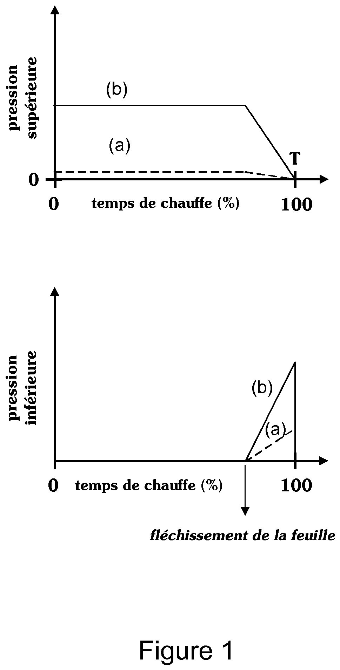

Ceci est illustré schématiquement par la figure 1 qui correspond à une représentation relative de la pression de gaz chaud injecté au-dessus (pression supérieure) et en dessous (pression inférieure) d'une feuille de verre non revêtue (a) et d'une feuille de verre revêtue d'une couche à basse émissivité (b), chauffées dans un four : l'injection de gaz chaud au-dessus de la feuille de verre est enclenchée dès l'entrée de la feuille dans le four et est maintenue durant une grande partie du temps total de chauffe T, tandis que l'injection de gaz chaud en dessous de la feuille de verre n'est enclenchée que lorsque le bilan thermique de la chaleur apportée à chaque face de la feuille devient défavorable à la face inférieure et que, par conséquent, la feuille s'infléchit. Ce phénomène survient le plus souvent vers la fin de cycle de chauffe, par exemple, vers 80% du temps total de chauffe T. Le plus souvent également, l'injection de gaz chaud au-dessus de la feuille de verre est stoppée lorsque l'injection de gaz chaud en dessous de la feuille de verre est enclenchée. De plus, pour les raisons exposées plus haut, la pression de gaz chaud au-dessus de la feuille de verre doit être significativement plus importante dans le cas d'une feuille de verre revêtue d'une couche à basse émissivité (phénomène de fléchissement accentué) par rapport à une feuille de verre non revêtue.

Les solutions de l'art antérieur ont toutes été développées dans l'optique de rétablir la planéité des feuilles de verre chauffées dans un four, qu'il s'agisse de feuilles de verre non revêtues (sans couche) ou de feuilles de verre revêtues d'une couche de type inorganique avec des propriétés particulières de basse émissivité (low-e). Dans ces deux cas, le verre ainsi que l'éventuelle couche ne subissent aucune modification chimique significative du fait du traitement thermique dans le four.

Dans le cas particulier du traitement thermique, en vue d'un trempe ultérieure, d'une feuille de verre portant un revêtement décoratif de type peinture à base d'émail et de matière organique, telle que décrite par exemple dans la demande WO2007/104752A1, des phénomènes indésirables surviennent du fait de la présence de la matière organique. En effet, dans le four à une température qui atteint souvent 700°C, cette matière organique subit une dégradation thermique violente et, plus particulièrement, une combustion (du fait de la présence d'air dans le four) rapide et violente. Une telle combustion fournit de grandes quantités de chaleur et donne souvent naissance à des flammes de combustion. Lorsque le revêtement décoratif couvrant la feuille de verre comprend une quantité non négligeable de matière organique (à partir d'environ 10 % en masse), la transformation de la matière organique en gaz de combustion dans le four de chauffe s'accompagne donc de flammes qui prennent naissance à la surface de la feuille de verre et qui peuvent parfois atteindre une hauteur importante, de l'ordre de plusieurs dizaines de centimètres. Ces flammes présentent de sérieux inconvénients et sont dès lors indésirables car :
- elles engendrent une diminution de la qualité du produit fini après la trempe. Le revêtement montre en effet, une fois trempé, une mauvaise homogénéité de surface due à une combustion trop violente et non homogènement répartie à la surface de la feuille et présente ainsi une piètre esthétique (traces, dépôts noirs, couleur non homogène,...);
- elles détériorent le four de chauffe du fait de la proximité de certains éléments (thermocouples, résistances électriques, injecteurs de gaz,...) du four par rapport aux feuilles de verre convoyées, et ce, d'autant plus que leur taille est importante.

### 3. Objectifs de l'invention

L'invention a notamment pour objectif de pallier à ces derniers inconvénients en résolvant le problème technique, à savoir la combustion rapide et violente, qui s'accompagne très souvent de flammes, lors du chauffage dans un four de feuilles de verre portant un revêtement à base de matière organique, en vue en particulier de leur trempe ultérieure.

Plus précisément, un objectif de l'invention, dans au moins un de ses modes de réalisation, est de fournir un procédé de chauffage dans un four de feuilles de verre portant un revêtement à base de matière organique, qui permet d'atteindre un produit final trempé qui soit homogène visuellement et qui possède l'esthétique recherchée.

Un autre objectif de l'invention est de fournir un procédé de chauffage dans un four de feuilles de verre portant un revêtement à base de matière organique qui permet de préserver l'outil de chauffe.

Finalement, un dernier objectif de l'invention est de fournir une solution aux désavantages de l'art antérieur qui soit simple et économique.

### 4. Exposé de l'invention

Conformément à un mode de réalisation particulier, l'invention concerne un procédé de chauffage dans un four de feuilles de verre portant un revêtement à base de matière organique dans lequel (i) lesdites feuilles de verre sont transportées par un convoyeur à rouleaux, (ii) les faces d'une feuille de verre sont chauffées durant un temps T par des moyens de chauffage par radiation disposés au-dessus et en dessous de ladite feuille et dans lequel (iii) lesdites faces sont soumises, à un moment donné et pendant un laps de temps donné, à un effet de convection forcée de chaleur par injection d'un gaz chaud au-dessus et en dessous de ladite feuilles de verre.

Selon le procédé de l'invention, l'injection du gaz chaud au-dessus de la feuille de verre est enclenchée au moins durant la combustion de ladite matière organique du revêtement. En particulier, le gaz chaud est injecté au-dessus de la feuille de verre, la pression du gaz chaud au-dessus de la feuille de verre est augmentée entre t1 et t2, t1 étant le moment où les flammes issues de la combustion de la matière organique apparaissent et t2 le moment où lesdites flammes disparaissent. On entend par combustion, la réaction d'oxydo-réduction entre un combustible et un comburant : le combustible, qui est dans le cas présent la matière organique, s'oxyde grâce à un comburant oxydant tel que l'oxygène présent dans l'air ambiant du four. La combustion génère (i) de la chaleur et (ii) des produits de combustion, le plus souvent gazeux tels que CO₂, CO et H₂O. Lorsque les produits de combustion ne peuvent plus être oxydés, c'est-à-dire qu'ils ne peuvent plus réagir avec le comburant, la combustion est dite complète.

Ainsi, l'invention repose sur une approche tout à fait nouvelle et inventive car elle permet de traiter thermiquement des feuilles de verre portant un revêtement à base de matière organique, en gérant la combustion de la matière organique présente en quantité significative, via un contrôle particulier et différent de celui connu dans l'état de la technique pour traiter thermiquement du verre non revêtu ou revêtu d'une couche de type inorganique. En particulier, l'injection du gaz chaud au-dessus de la feuille de verre au moins durant la combustion de la matière organique du revêtement, et en particulier au moins entre t1 et t2, a pour rôle d'engendrer une combustion plus homogène sur toute la surface du verre et donc améliorée. De plus, le flux de gaz permet, d'une part, (i) de souffler les flammes et de réduire considérablement leur taille jusqu'à les éliminer.

Toujours selon le procédé de l'invention, le gaz chaud qui est injecté au-dessus de la feuille de verre comprend au moins un comburant, qui s'ajoute alors à l'oxygène de l'air présent dans l'air ambiant du four. Ainsi, le processus de combustion est amélioré du fait de l'apport supplémentaire de comburant, ce qui est en faveur encore d'un résultat esthétique homogène pour le produit final trempé. Par comburant, on entend tout composé qui va se réduire durant la réaction de combustion et qui va ainsi permettre l'oxydation du combustible.

A côté de cela, conformément à l'invention, l'injection du gaz chaud au-dessus de la feuille de verre peut également être enclenchée en dehors de la durée du processus de combustion et en particulier, en dehors de la présence des flammes (donc en dehors de la gamme de temps t1-t2). Dans ce cas particulier, l'injection du gaz chaud au-dessus de la feuille de verre jouera un rôle additionnel classique de maintien ou de rétablissement de la planéité de la feuille.

Selon une première mise en oeuvre avantageuse ou variante de l'invention, la pression minimale du gaz chaud injecté au-dessus de la feuille de verre est de 5 mbar. Cette pression minimale permet un bon apport supplémentaire de comburant et permet d'améliorer de manière significative le processus de combustion, et en particulier, son homogénéité.

Selon une autre mise en oeuvre avantageuse ou variante de l'invention, la pression maximale du gaz chaud injecté au-dessus de la feuille de verre est de 15 bars. Cette valeur maximale permet d'éviter un choc thermique à la feuille de verre qui pourrait survenir du fait d'un apport de chaleur trop massif en un court laps de temps.

La combustion engendrée par la présence de matière organique dans le revêtement entraîne un échauffement supplémentaire de la face supérieure de la feuille de verre du à l'exothermicité de la réaction de combustion. Dès lors, l'injection d'un gaz chaud en dessous de ladite feuille, dirigé vers sa face inférieure, permet, selon l'invention et de façon connue, de rétablir l'équilibre thermique entre chacune des faces de la feuille et ainsi limiter ou éviter son fléchissement et les conséquences indésirables qui en découlent sur le produit final. Selon l'invention, l'injection d'un gaz chaud en dessous de la feuille de verre est enclenchée lorsque la feuille de verre s'infléchit de manière convexe au-dessus du convoyeur. Les avantages de l'injection d'un gaz chaud en dessous de la feuille de verre sont donc les mêmes que ceux de l'état de la technique, c'est-à-dire le maintien de la planéité de la feuille de verre, et ils ne sont dès lors pas détaillés plus amplement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquels :
la figure 1, conforme à l'état de la technique, est une représentation schématique et relative de la pression de gaz chaud injecté au-dessus (pression supérieure) et en dessous (pression inférieure) d'une feuille de verre non revêtue (a) et d'une feuille de verre revêtue d'une couche à basse émissivité (b), chauffées dans un four durant un temps total T;

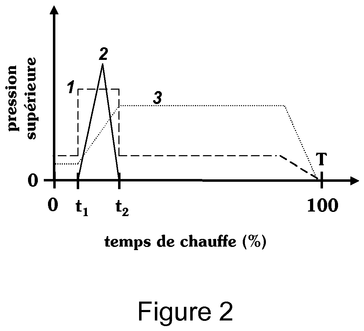

la figure 2, selon trois modes de réalisation de l'invention (profils de pression 1, 2 et 3), est une représentation schématique et relative de la pression de gaz chaud injecté au-dessus (pression supérieure) d'une feuille de verre portant un revêtement à base de matière organique et chauffée dans un four durant un temps total T.

### 6. Description d'un mode de réalisation de l'invention

Le revêtement à base de matière organique selon l'invention est, par exemple, un revêtement décoratif de type peinture. On entend par « revêtement de type peinture », notamment une ou plusieurs couches de peinture, de laque, de vernis ou d'émail. Ces revêtements comprennent souvent une quantité significative (à partir d'environ 10 % en masse et jusqu'à 90% en masse) de divers composants organiques tels que, typiquement, des liants (polymères), des durcisseurs (oligomères), des plastifiants, et d'autres additifs.

Selon l'invention, les feuilles de verre sont transportées au travers du four par un convoyeur à rouleaux, qui sont de préférence sensiblement horizontaux.

Les moyens de chauffage par radiation, selon l'invention, sont typiquement, à titre d'exemple, des résistances électriques ou des équivalents.

Le gaz chaud peut être injecté dans l'enceinte du four en direction de la feuille de verre, que ce soit au-dessus ou en dessous de ladite feuilles, par des injecteurs reliés à des moyens d'alimentation en gaz chaud, tels qu'une rampe d'alimentation, disposés au-dessus ou en dessous du convoyeur et eux-mêmes connectés à au moins un compresseur.

On préfère que les moyens d'alimentation en gaz chaud des injecteurs disposés sous le convoyeur soient commandées séparément des moyens d'alimentation en gaz chaud des injecteurs disposés au-dessus du convoyeur, par exemple au moyen de vannes d'ouverture et de fermeture de ces dernières.

L'injection de gaz chaud sous forme de jets peut se faire perpendiculairement aux feuilles de verre, tel que décrit dans le brevet US4390359, ou alternativement de manière oblique en direction de la feuille, tel que décrit dans le brevet EP 1 377 529 B1.

Le gaz chaud injecté dans le four peut avoir été réchauffé à partir de la température ambiante à son entrée dans les moyens d'alimentation des injecteurs, pendant son passage dans ces moyens jusqu'aux injecteurs, lesquels moyens sont eux-mêmes chauffés par les résistances électriques disposées dans le four. Alternativement, le gaz peut être préchauffé à l'extérieur du four avant d'être introduit dans les moyens d'alimentation des injecteurs. De préférence, le gaz chaud est injecté au-dessus de la feuille de verre à une température supérieure à 400 °C.

Selon l'invention, le gaz chaud injecté au-dessus de la feuille de verre comprend au moins un comburant. De manière préférée, le comburant est de l'oxygène. De manière particulièrement préférée car économique, le gaz chaud injecté au-dessus de la feuille de verre est de l'air.

Le gaz chaud injecté au-dessus de la feuille de verre peut avoir une composition identique au gaz chaud injecté en dessous de la feuille de verre. Alternativement, ces deux gaz peuvent être de compositions différentes.

De même, le gaz chaud injecté au-dessus de la feuille de verre peut avoir une température identique ou différente de celle du gaz chaud injecté en dessous de la feuille de verre.

Selon l'invention, le gaz chaud est injecté au-dessus de la feuille de verre au moins entre t₁ et t₂, t₁ étant le moment où les flammes issues de la combustion de la matière organique apparaissent et t₂ le moment où lesdites flammes disparaissent.

Des mesures par analyse thermogravimétrique sous air de feuilles de verre portant un revêtement à base de matière organique révèlent que la combustion de celle-ci débute généralement lorsque que le verre et le revêtement ont atteint une température d'environ 250°C. Les flammes, conséquences de ladite combustion, apparaissent dès lors dès que le verre et le revêtement ont atteint au moins cette température. Les flammes apparaissent généralement lorsque la température atteint le «point d'auto-inflammation » (ou d'auto-ignition), qui est la température à partir de laquelle un gaz ou une vapeur s'enflamme spontanément en l'absence de flamme pilote ou d'étincelle. Le temps t₁, correspondant au moment où les flammes issues de la combustion de la matière organique apparaissent, peut bien entendu varier en fonction de la température dans l'enceinte four, de l'épaisseur du verre, etc.

Selon un mode de réalisation particulièrement préféré de l'invention, la pression du gaz chaud injecté au-dessus de la feuille de verre passe par un maximum entre t₁ et t₂, y compris les temps t₁ et t₂. La valeur maximale en pression peut se situer à t₁, à t₂, à t₁ et t₂ ou encore à l'intérieur de la gamme de temps t₁-t₂.

Une telle caractéristique permet d'améliorer encore la combustion de la matière organique et également de souffler les flammes plus efficacement. A titre d'exemple, la figure 2 illustre, de façon schématique et en relatif, trois profils 1, 2 et 3 de pression du gaz chaud injecté au-dessus de la feuille de verre (pression supérieure) selon ce mode de réalisation de l'invention.

Selon un mode de réalisation de l'invention, illustré au profil 1 de la Figure 2, la pression du gaz chaud injecté au-dessus de la feuille de verre est augmenté à t₁, maintenu sensiblement à la même valeur entre t₁ et t₂ et ensuite diminué à t₂, jusqu'à une valeur identique ou non à la valeur de pression initiale avant t₁. Selon ce mode de réalisation, la valeur de pression initiale peut être non nulle. Dans ce cas, le gaz chaud au-dessus de la feuille de verre est également injecté en dehors du laps de temps entre t₁ et t₂ dans le but de maintenir ou de rétablir la planéité de la feuille de verre.

Selon un mode de réalisation additionnel de l'invention et tel qu'illustré au profil 2 de la Figure 2, la pression du gaz chaud présente un profil en pic entre t₁ et t₂, la pression supérieure en dehors de t₁ et t₂ étant sensiblement égale à zéro.

Selon un autre mode de réalisation additionnel de l'invention et tel qu'illustré au profil 3 de la Figure 2, la pression du gaz chaud injecté au-dessus de la feuille de verre augmente entre t₁ et t₂ pour atteindre un palier au-delà de t₂. De préférence, la pression du gaz chaud injecté au-dessus de la feuille de verre augmente entre t₁ et t₂ d'au moins 5 %.

Selon un mode de réalisation de l'invention, la pression minimale du gaz chaud injecté au-dessus de la feuille de verre est de 5 mbar. De manière préférée, la pression minimale est de 10 mbar.

Selon un autre mode de réalisation de l'invention, la pression maximale du gaz chaud injecté au-dessus de la feuille de verre est de 15 bars. De manière préférée, la pression maximale est de 10 bars.

La pression du gaz est mesurée de préférence à l'extrémité des moyens d'alimentation en gaz chaud ou des injecteurs.

Selon un mode de réalisation préféré de l'invention, le temps t₁, qui correspond à l'apparition des flammes, varie de 1 à 20 % du temps total de chauffe T. De manière plus préférée, le temps t₁ varie de 5 à 15 % du temps total de chauffe T.

De manière connue, l'injection d'un gaz chaud en dessous de la feuille de verre est enclenchée lorsque le bilan thermique de la chaleur apportée à chaque face de la feuille devient défavorable à sa face inférieure et/ou lorsque la feuille de verre s'infléchit de manière convexe au-dessus du convoyeur. L'enclenchement de l'injection du gaz chaud sous le convoyeur peut, selon une forme préférée de l'invention, être commandé par un système de détection de l'inflexion de la feuille de verre au-dessus du convoyeur.

D'autres détails et caractéristiques avantageuses ressortiront ci-après de la description de l'exemple de réalisation selon l'invention ainsi que de l'exemple comparatif, selon l'état de la technique.

### Exemple 1 comparatif (non conforme à l'invention)

Une feuille de verre clair portant un revêtement de type peinture à base de matière organique a été soumise à un cycle de chauffe qui est classiquement celui utilisé pour une feuille revêtue d'une couche à basse émissivité de type inorganique, pour laquelle les injections de gaz chaud au-dessus et en dessous de la feuille de verre sont contrôlées pour maintenir ou rétablir la planéité de ladite feuille.

La feuille de verre selon le présent exemple possède une épaisseur de 4 mm et est de dimensions 100 cm x 200 cm. Elle est recouverte d'un revêtement d'émail. Ce revêtement correspond à un émail de couleur blanche à base d'une résine polyacrylique. Cet émail comprend environ 25% en poids de matière organique et environ 75 % en poids de fritte de verre (« fillers »). Ce revêtement est d'une épaisseur de 50 microns une fois déposé sur la feuille de verre et séché.

Cette feuille de verre est convoyée dans un four de chauffage à double convection classique, tel que celui décrit dans le brevet EP 1 377 529 B1, en vue de lui faire subir un traitement de chauffage préalable à une étape ultérieure de trempe. Ledit four comprend un convoyeur à rouleaux horizontaux et est muni de résistances électriques disposées au-dessus et en dessous du convoyeur de sorte à établir dans le four une température de l'ordre de 670°C. Le four est également équipé de rampes d'alimentation d'injecteurs en air chaud vers la feuille de verre convoyée. Ces rampes sont disposées parallèlement les unes aux autres et à la feuille de verre, et orthogonalement au sens de déplacement de la feuille dans le four. Ces rampes sont au nombre de 9 au-dessus du convoyeur et de 5 en dessous. Chaque rampe supérieure est séparée de la rampe voisine d'une distance de 550 mm et chaque rampe inférieure est disposée sous un rouleau du convoyeur sur 8. Chacune des rampes est munie de 45 injecteurs équidistants, d'une section de sortie de 0.7 mm et cette section est séparée de la feuille de verre d'une distance de 150 mm. Les injecteurs supérieurs sont disposés de manière telle que leur axe de symétrie soit orthogonal au plan de la face supérieure de la feuille de verre et les injecteurs inférieurs de manière telle à ce que leur axe de symétrie soit oblique relativement au sens de déplacement de la feuilles de verre dans le four et qu'il coupe le plan de la face inférieure de cette feuilles aux trois quarts de la distance séparant les axes de deux rouleaux successifs. Les rampes d'alimentation sont constituées d'un tube d'un diamètre intérieur de 50 mm et sont elles-mêmes alimentées chacune en air par un serpentin de 12 mm de longueur et de 15 mm de diamètre enroulé autour de la rampe. La température de l'air à l'intérieur des rampes est ainsi maintenue à 670°C, la pression d'alimentation en air des rampes inférieures et supérieures étant réglable séparément.

Dès l'entrée de la feuille de verre, les rampes d'alimentation supérieures des injecteurs sont soumises à une pression d'air de 6 bars et les rampes inférieures ne sont, quant à elle, pas alimentées en air.

Après 10 secondes de présence dans le four, des flammes de combustion violente et de taille importante (plusieurs dizaines de centimètres) apparaissent (t₁). Elles prennent naissance à la surface de la feuille de verre.

Après 14 secondes de présence dans le four, la feuille de verre s'incurve de manière convexe au-dessus du convoyeur. Les rampes inférieures d'alimentation en gaz chaud des injecteurs sont alors alimentées en air sous une pression de 1 bar afin de rétablir la planéité de ladite feuille. Le cycle de chauffe prend fin 180 secondes après l'entrée de la feuille dans le four (temps total T).

Le produit obtenu à la fin d'un tel cycle de chauffe présente un revêtement comportant un émail sintérisé mais d'aspect totalement inhomogène. Ils présentent des traces noires inesthétiques, dues à une combustion trop rapide et trop violente et non homogène sur toute la surface de la feuille verre. Dès lors, le procédé connu de l'état de la technique et le timing requis pour l'enclenchement des injecteurs n'est pas approprié au cas d'une feuille de verre portant un revêtement à base de matière organique. Si un tel procédé permet effectivement la combustion de la matière organique par la chaleur, celle-ci n'est pas homogène et entraîne les inconvénients précités, dus principalement à la présence des flammes.

De plus, une exposition répétée du four de trempe à ces flammes du fait du passage successif de nombreuses feuilles de verres de ce type sur le convoyeur entraînerait de manière certaine une détérioration rapide et irréversible dudit four, ce qui tout à fait inacceptable.

### Exemple 2 (conforme à l'invention)

Une autre feuille de verre clair de caractéristiques identiques à l'exemple 1 comparatif est convoyée dans le même four que celui décrit dans l'exemple 1 comparatif.

Dès l'entrée de la feuille de verre dans le four de chauffe, aucune rampe d'alimentation n'est alimentée en air.

Après 10 secondes de présence dans le four (t₁), des flammes de combustion violente et de taille importante (plusieurs dizaines de centimètres) apparaissent. Les rampes d'alimentation supérieures des injecteurs sont soumises à ce moment précis à une pression d'air de 8 bars et les rampes inférieures ne sont, quant à elle, toujours pas alimentées en air.

Après 11 secondes (t₂), les flammes ont totalement disparu et l'alimentation des rampes supérieures des injecteurs est alors coupée.

Le contrôle de la planéité de le feuille de verre se fait ensuite de manière classique en jouant séparément sur les pressions des rampes d'alimentation inférieures et supérieures.

Le cycle de chauffe prend fin 180 secondes après l'entrée de la feuille dans le four (temps total T).

Le produit obtenu à la fin d'un tel cycle de chauffe présente un revêtement d'émail sintérisé d'une couleur blanche homogène et d'une esthétique désirée.

Il apparaît donc clair que le procédé de l'invention requérant un timing particulier pour l'enclenchement des injecteurs (en particulier, les injecteurs supérieurs) permet la trempe efficace d'une feuille de verre portant un revêtement à base de matière organique et permet l'obtention d'un produit trempé d'aspect homogène et esthétiquement satisfaisant.

De plus, la gestion de l'apparition des flammes ou du moins de leur taille, conformément à l'invention, permet bien de préserver l'outil de chauffe de dégradation.

Finalement, l'invention fournit une solution problème technique qui soit simple et économique dans la mesure où elle ne demande pas d'investissements supplémentaires (développement et/ou achat de nouveaux fours de chauffe) mais propose une adaptation nouvelle et inventive de l'utilisation des fours à double convection existants et développés pour un tout autre problème technique (celui du fléchissement de la feuille de verre).

Bien entendu, l'invention n'est pas limitée à cet exemple de réalisation ci-dessus.

## Revendications

1. Procédé de chauffage dans un four de feuilles de verre portant un revêtement à base de matière organique dans lequel (i) lesdites feuilles de verre sont transportées par un convoyeur à rouleaux, (ii) les faces d'une feuille de verre sont chauffées durant un temps T par des moyens de chauffage par radiation disposés au-dessus et en dessous de ladite feuille et dans lequel (iii) lesdites faces sont soumises, à un moment donné et pendant un laps de temps donné, à un effet de convection forcée de chaleur par injection d'un gaz chaud au-dessus et en dessous de ladite feuilles de verre, caractérisé en ce la pression du gaz chaud au-dessus de la feuille de verre est augmentée entre t₁ et t₂, t₁ étant le moment où les flammes issues de la combustion de la matière organique apparaissent et t₂ le moment où lesdites flammes disparaissent et en ce que le gaz chaud injecté au-dessus de la feuille de verre comprend au moins un comburant.

2. Procédé de chauffage dans un four selon la revendication 1, **caractérisé en ce que** la pression du gaz chaud injecté au-dessus de la feuille de verre passe par un maximum entre t₁ et t₂.

3. Procédé de chauffage dans un four selon la revendication 2, **caractérisé en ce que** la pression du gaz chaud injecté au-dessus de la feuille de verre augmente d'au moins 5 % entre t₁ et t₂.

4. Procédé de chauffage dans un four selon l'une des revendications précédentes, **caractérisé en ce que** le gaz chaud est injecté au-dessus de la feuille de verre à une température supérieure à 400 °C.

5. Procédé de chauffage dans un four selon l'une des revendications précédentes, **caractérisé en ce que** le gaz chaud injecté au-dessus de la feuille de verre est de l'air.

6. Procédé de chauffage dans un four selon l'une quelconque des revendications précédentes, **caractérisé en ce que** la pression minimale du gaz chaud injecté au-dessus de la feuille de verre est de 5 mbar.

7. Procédé de chauffage dans un four selon la revendication précédente, **caractérisé en ce que** la pression minimale du gaz chaud injecté au-dessus de la feuille de verre est de 10 mbar.

8. Procédé de chauffage dans un four selon l'une quelconque des revendications précédentes, **caractérisé en ce que** la pression maximale du gaz chaud injecté au-dessus de la feuille de verre est de 15 bars.

9. Procédé de chauffage dans un four selon la revendication précédente, **caractérisé en ce que** la pression maximale du gaz chaud injecté au-dessus de la feuille de verre est de 10 bars.

10. Procédé de chauffage dans un four selon l'une quelconque des revendications précédentes, **caractérisé en ce que** l'injection d'un gaz chaud en dessous de la feuille de verre est enclenchée lorsque le feuille de verre s'infléchit de manière convexe au-dessus du convoyeur.

## Patentansprüche

1. Verfahren zum Erwärmen von Glasscheiben, die eine Beschichtung auf der Basis von organischem Material tragen, in einem Ofen, wobei (i) die Glasscheiben durch einen Rollenförderer transportiert werden, (ii) die Flächen einer Glasscheibe während einer Zeit T mit Strahlungserwärmungsmitteln erwärmt werden, die über und unter der Scheibe angeordnet sind, und wobei (iii) die Flächen zu einem gegebenen Zeitpunkt und während einer gegebenen Zeitdauer einem erzwungenen Wärmekonvektionseffekt durch Einspritzen eines heißen Gases über und unter den Glasscheiben ausgesetzt werden,
**dadurch gekennzeichnet, dass** der Druck des heißen Gases über der Glasscheibe zwischen t₁ und t₂ erhöht wird, wobei t₁ der Moment ist, wo die Flammen aus der Verbrennung des organischen Materials auftreten, und t₂ der Moment ist, wo die Flammen verschwinden, und dadurch, dass das heiße Gas, das über der Glasscheibe eingespritzt wird, mindestens ein Oxidationsmittel umfasst.

2. Verfahren zum Erwärmen in einem Ofen nach Anspruch 1, **dadurch gekennzeichnet, dass** der Druck des heißen Gases, das über der Glasscheibe eingespritzt wird, durch ein Maximum zwischen t₁ und t₂ hindurchgeht.

3. Verfahren zum Erwärmen in einem Ofen nach Anspruch 2, **dadurch gekennzeichnet, dass** der Druck des heißen Gases, das über der Glasscheibe eingespritzt wird, um mindestens 5 % zwischen t₁ und t₂ steigt.

4. Verfahren zum Erwärmen in einem Ofen nach einem der vorhergehenden Ansprüche, **dadurch gekennzeichnet, dass** das heiße Gas über der Glasscheibe bei einer Temperatur von mehr als 400 °C eingespritzt wird.

5. Verfahren zum Erwärmen in einem Ofen nach einem der vorhergehenden Ansprüche, **dadurch gekennzeichnet, dass** das heiße Gas, das über der Glasscheibe eingespritzt wird, Luft ist.

6. Verfahren zum Erwärmen in einem Ofen nach einem der vorhergehenden Ansprüche, **dadurch gekennzeichnet, dass** der minimale Druck des heißen Gases, das über der Glasscheibe eingespritzt wird, 5 mbar beträgt.

7. Verfahren zum Erwärmen in einem Ofen nach dem vorhergehenden Anspruch, **dadurch gekennzeichnet, dass** der minimale Druck des heißen Gases, das über der Glasscheibe eingespritzt wird, 10 mbar beträgt.

8. Verfahren zum Erwärmen in einem Ofen nach einem der vorhergehenden Ansprüche, **dadurch gekennzeichnet, dass** der maximale Druck des heißen Gases, das über der Glasscheibe eingespritzt wird, 15 bar beträgt.

9. Verfahren zum Erwärmen in einem Ofen nach dem vorhergehenden Anspruch, **dadurch gekennzeichnet, dass** der maximale Druck des heißen Gases, das über der Glasscheibe eingespritzt wird, 10 bar beträgt.

10. Verfahren zum Erwärmen in einem Ofen nach einem der vorhergehenden Ansprüche, **dadurch gekennzeichnet, dass** das Einspritzen eines heißen Gases über der Glasscheibe ausgelöst wird, wenn sich die Glasscheibe konvex über dem Förderer biegt.

## Claims

1. Process for heating, in a furnace, glass sheets bearing a coating based on organic material, in which (i) said glass sheets are transported by a roller conveyor, (ii) the faces of a glass sheet are heated for a time T by radiation heating means positioned above and below said sheet and in which (iii) said faces are subjected, at a given moment and for a given time period, to a forced heat convection effect by injecting a hot gas above and below said glass sheets, **characterized in that** the pressure of the hot gas above the glass sheet is increased between t₁ and t₂, t₁ being the moment when the flames resulting from the combustion of the organic material appear and t₂ the moment when said flames disappear and **in that** the hot gas injected above the glass sheet comprises at least one oxidant.

2. Process for heating in a furnace according to Claim 1, **characterized in that** the pressure of the hot gas injected above the glass sheet passes through a maximum between t₁ and t₂.

3. Process for heating in a furnace according to Claim 2, **characterized in that** the pressure of the hot gas injected above the glass sheet increases by at least 5% between t₁ and t₂.

4. Process for heating in a furnace according to one of the preceding claims, **characterized in that** the hot gas is injected above the glass sheet at a temperature above 400°C.

5. Process for heating in a furnace according to one of the preceding claims, **characterized in that** the hot gas injected above the glass sheet is air.

6. Process for heating in a furnace according to any one of the preceding claims, **characterized in that** the minimum pressure of the hot gas injected above the glass sheet is 5 mbar.

7. Process for heating in a furnace according to the preceding claim, **characterized in that** the minimum pressure of the hot gas injected above the glass sheet is 10 mbar.

8. Process for heating in a furnace according to any one of the preceding claims, **characterized in that** the maximum pressure of the hot gas injected above the glass sheet is 15 bar.

9. Process for heating in a furnace according to the preceding claim, **characterized in that** the maximum pressure of the hot gas injected above the glass sheet is 10 bar.

10. Process for heating in a furnace according to any one of the preceding claims, **characterized in that** the injection of a hot gas below the glass sheet is triggered when the glass sheet bends convexly above the roller conveyor.
